(19) **Europäisches Patentamt**
**European Patent Office**
**Office européen des brevets**

(11) **EP 2 126 543 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
***G01N 3/56*** (2006.01)

(21) Anmeldenummer: **07845305.7**

(22) Anmeldetag: **21.12.2007**

(86) Internationale Anmeldenummer:
**PCT/AT2007/000581**

(87) Internationale Veröffentlichungsnummer:
**WO 2008/077169 (03.07.2008 Gazette 2008/27)**

(54) **VERFAHREN UND MESSANORDNUNG ZUR KALIBRIERUNG DER TRIBOMETRISCHEN VERSCHLEISSBESTIMMUNG MIT RADIOISOTOPEN**

METHOD AND MEASURING ARRANGEMENT FOR CALIBRATING THE TRIBOMETRIC DETERMINATION OF WEAR BY MEANS OF RADIOACTIVE ISOTOPES

PROCÉDÉ ET DISPOSITIF DE MESURE POUR LE CALIBRAGE DE LA DÉTERMINATION TRIBOMÉTRIQUE DE L'USURE AU MOYEN DE L'ACTIVITÉ D'ISOTOPES RADIOACTIFS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 AT 21322006**

(43) Veröffentlichungstag der Anmeldung:
**02.12.2009 Patentblatt 2009/49**

(73) Patentinhaber: **AC2T Research GmbH**
**2700 Wiener Neustadt (AT)**

(72) Erfinder:
• **JECH, Martin**
**A-1030 Wien (AT)**
• **VORLAUFER, Georg**
**A-2353 Guntramsdorf (AT)**
• **PAUSCHITZ, Andreas**
**A-1230 Wien (AT)**
• **WOPELKA, Thomas**
**A-1160 Wien (AT)**

(74) Vertreter: **Margotti, Herwig Franz**
**Schwarz & Partner**
**Patentanwälte**
**Wipplingerstrasse 30**
**1010 Wien (AT)**

(56) Entgegenhaltungen:
**US-A- 3 905 221**

• **KASAKO TOSHISO ET AL: "Wear measurement at depths of several tens micrometers on the surface of iron using a thin layer activation method by 7 MeV proton beam" NUCL INSTRUM METHODS PHYS RES APR 1989, Bd. B40-41, Nr. part 1, 7. November 1988 (1988-11-07), Seiten 587-590, XP008093178**
• **SCHERGE M ET AL: "Wear measurement using radionuclide-technique (RNT)" WEAR; WEAR MAY 2003, Bd. 254, Nr. 9, Mai 2003 (2003-05), Seiten 801-817, XP002484655 in der Anmeldung erwähnt**
• **NIILER A ET AL: "USE OF THE <56>Fe(p,n) <56>Co REACTION IN EROSIVE WEAR MEASUREMENTS" IEEE TRANS NUCL SCI FEB 1978, Bd. NS-26, Nr. 1 part 2, Februar 1978 (1978-02), Seiten 1815-1817, XP008093321**
• **POPA-SIMIL L ET AL: "Thin layer activation-based evaluation of tribological behaviour of light ion-implanted metallic samples" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, Bd. 127-128, 1. Mai 1997 (1997-05-01), Seiten 949-953, XP004096881 ISSN: 0168-583X**

EP 2 126 543 B1

- PAUSCHITZ A ET AL: "Investigation of influence of inclination on friction and wear mechanisms in piston ring cylinder liner contact with the new SRV[registered trademark] 4 test rig" PROC. WORLD TRIBOL. CONG.; PROCEEDINGS OF THE WORLD TRIBOLOGY CONGRESS III - 2005; PROCEEDINGS OF THE WORLD TRIBOLOGY CONGRESS III - 2005 2005, 2005, Seiten 561-562, XP008093169

**Beschreibung**

Die Erfindung betrifft ein Verfahren zur Ermittlung eines Tiefenprofils der Aktivität von radioaktiven Isotopen an einem Referenzkörper, gemäß dem Oberbegriff des Anspruchs 1.

Die Erfindung betrifft weiters ein Messsystem zur Ermittlung eines Tiefenprofils der Aktivität von radioaktiven Isotopen an einem Referenzkörper, der in einem oberflächennahen Aktivierungsbereich zumindest ein radioaktives Isotop mit einer definierten Konzentrationsverteilung besitzt, gemäß dem Oberbegriff des Anspruchs 7.

Bei der Verschleißmessung bei tribologischen Prozessen mit Hilfe von radioaktiven Isotopen wird eine dünne (zw. 20 $\mu$m - einige hundert $\mu$m) oberflächennahe Schicht eines zu untersuchenden Probenkörpers mit radioaktiven Isotopen versehen. Dafür existieren mehrere Möglichkeiten:

■ Implantation bzw. Diffusion von radioaktiven Isotopen in den Probenkörper
■ Aktivierung von im Probenkörper befindlichen Kernen durch Kernreaktionen mit Neutronen und geladenen Teilchen (z.B.: Protonen- oder Deuteronenbestrahlung); die Probe wird in einem Reaktor oder mit Hilfe eines Teilehenbeschleunigers bestrahlt und es kommt zu einer Kernreaktion:

$$^m X (a,b)^n Y$$

In der vorliegenden Erfindung ist vorzugsweise beabsichtigt, die Eisenatome ($^{56}$Fe) eines Stahltyps durch Deuteronenbeschuss zu $^{57}$Co umzuwandeln [$^{56}$Fe(d,n)$^{57}$Co], welche mit einer Halbwertszeit von 271 Tagen unter Emission von Gammastrahlung in den Grundzustand übergehen. Nach der erfolgten Aktivierung besitzt der Probenkörper eine bestimmte Gesamtaktivität und ein bestimmtes Aktivität-Tiefenprofil, das ist der Verlauf der spezifischen Aktivität (Aktivität pro Schichtdicke angegeben vorzugsweise in Bq/$\mu$m) der jeweiligen Isotope, abhängig von dem (makroskopischen) Normalabstand (senkrecht zur mittleren Linie der gewichteten Rauheiten, z.B. nach DIN 4777 ermittelt) zur Oberfläche des Probenkörpers. Sowohl die Gesamtaktivität als auch das Aktivitäts-Tiefenprofil sind von mehreren "Bestrahlungs-Parametern" abhängig. Das Aktivitäts-Tiefenprofil ist ein Maß für die jeweilige Konzentration der Isotope im jeweiligen Normalabstand zur Oberfläche des Probenkörpers.

Eine Verschleißbestimmung mit höchster Auflösung kann nur bei exakter Kenntnis des Aktivitäts-Tiefenprofils erreicht werden. Die erfindungsgemäße Verschleißbestimmung soll Untersuchungen realistischer Verschleißraten an Modellsystemen (z.B. Kolbenring gegen Zylinderliner) bzw. Modelltribometern ermöglichen, die ausgehend vom Modell den Schluss auf reale Verhältnisse zulassen. Die bisher bekannten Tribometer wiesen immer ein Eigenverhalten auf, das sich von realen Systemen unterschied, weshalb von an Modellen gewonnenen Erkenntnissen nicht auf die realen Verhältnisse geschlossen werden konnte. Bisher wurde das Tiefenprofil radioaktiver Isotope bei einer Aktivierung durch schnelle geladene Teilchen (Protonen, Deuteronen), welche durch einen Linearbeschleuniger, ein Zyklotron oder Synchrotron beschleunigt wurden, durch zwei Methoden, nämlich der Folienmethode und der Abriebmethode, ermittelt.

Bei der Folienmethode wird ein Stapel dünner Folien aus einer Legierung (meist aber aus einem reinen Element), welche je nach Gefüge mindestens einige Mikrometer diek sind, durch einen Teilchenstrahl, welcher senkrecht auf den Stapel trifft, aktiviert. Die Isotopen-Aktivitäten der Folien können anschließend für jede Folie einzeln vermessen werden, die Auflösung ist allerdings durch die Dicke und Fertigungspräzision der Folien begrenzt. Weiters ist es nicht möglich, geringere Aktivierungstiefen (weniger weit in die Materie reichende Oberflächenaktivierung) durch nicht senkrechte Bestrahlungen zu verifizieren, da bei einem Folienstapel Reflexionen und Brechungserscheinungen die Referenzbildung eines soliden Körpers aus der experimentellen Untersuchung verhindern (zumindest bei einem steifenden Einfallswinkel kleiner 20° zur Oberfläche).

Bei der Abriebsmethode werden von einem Referenzkörper, der aus dem gleichen Material wie der Probenkörper besteht, Schichten durch Reib-, Polier- oder Schneidprozesse von dem aktivierten soliden Referenzkörper abgetragen. Dabei kann allerdings eine signifikante Vermischung von höher aktivierten Schichten mit niedriger aktivierten Schichten nicht verhindert werden. Ebenfalls ist bei dieser Methode die Bestimmung der abgetragenen Schichtdicken nur größenordnungsmäßig und nicht mit einer höheren Genauigkeit von etwa einem Mikrometer möglich. Auch eine höhere Aktivierung des zu messenden Körpers bringt kaum signifikante Verbesserungen bei der Genauigkeit mit der Abriebsmethode, wodurch noch weiter unten ausführlich erläuterte Nachteile und Gefahren auftreten können.

Aus der WO 99/24812 sind ein Verfahren und eine Vorrichtung zur Überwachung von Abrieb, Korrosion und verwandten Problemen bekannt, die den oben erwähnten Stand der Technik widerspiegeln. Das bekannte Verfahren zur Überwachung des Abtrags von Material von einem Objekt umfasst das Bereitstellen eines soliden Körpers, der einen radioaktiven Tracer in einem vorgegebenen Muster aufweist, das Bereitstellen eines Umgebungsmediums, das in Kontakt mit dem soliden Körper steht, das Überwachen des Umgebungsmediums auf eine Veränderung des Niveaus des darin enthaltenen radioaktiven Tracer, die mit dem Abtragen des Materials von dem soliden Körper korrespondiert, und das Bestimmen des Zustands des soliden Körpers auf Basis der Veränderung des Niveaus des radioaktiven Tracers im Umgebungsmedium. Der radioaktive Tracer kann in einer Außenoder Innenschicht des soliden Körpers konzentriert sein. In weiteren Ansprüchen ist ein Verfahren zum Markieren eines Objekts offenbart, das das Aufbringen eines radioaktiven Tracers in einem vorgegebenen Muster auf das Objekt umfasst, indem der radioaktive Tracer mit einem Beschichtungsmedium kombiniert und das Beschichtungsmedium auf das Objekt aufgetragen wird.

Das Dokument KASAKO TOSHISO et al: "Wear measurement at depths of several tens micrometers on the surface of iron using a thin layer activation method by 7 MeV proton beam" NUCL INSTRUM METHODS PHYS RES APR 1989, Bd. B40-41, part 1, 7. November 1988, Seiten 587-590, offenbart in Abschnitt 2.2. ein Verfahren zur Bestimmung eines Tiefenprofils der Aktivität von radioaktiven Isotopen an einem Referenzkörper (Eisenblock), wobei ein oberflächennaher Aktivierungsbereich des Referenzkörpers mit einer definierten Konzentrationsverteilung der Isotope versehen wird, und dann abwechselnd die folgenden Schritte ausgeführt werden: Abtragen einer Schicht; Messen der abgetragenen Schichtdicke durch Vergleich mit der Höhe gegenüber dem Träger; Messen der Aktivität. Diese Merkmale entsprechen den Merkmalen der Oberbegriffe der Ansprüche 1 und 7.

Das Dokument SCHERGE M et al: "Wear measurement using radionuclide-technique (RNT)" WEAR; MAY 2003, Bd. 254, Nr. 9, Mai 2003, Seiten 801-817, beschreibt ein Verfahren zur tribometrischen Verschleißbestimmung mit einem im Oberflächenbereich radioaktiv markierten Probenkörper und einem ihn an einer Reibfläche im Kreislauf umströmenden, Verschleißpartikel transportierenden Strömungsmedium.

Der Stand der Technik ist bisher auf Verschleißmessungen mit radioaktiven Isotopen an Motoren oder motorähnlichen Systemen fokussiert, siehe z.B. Scherge M., Pöhlmann K., Gerve A.; Wear measurement using radioniclide-technique (RNT); Wear 254 (2003); 801-817, Anpassungen an Modelltribometer oder Modellteile (Stück Kolbenring gegen Stück Zylinderliner) mit kleinen Ölmengen (kleiner 1 Liter) sind derzeit nicht erfolgt.

Weiters ist zu nennen, dass für Verschleißmessaufgaben mit Auflösungen im Nanometerbereich bzw. Nanometer pro Stunde (Unterscheidbarkeit zweier Ereignisse, wobei die Gesamtmesszeit maximal eine Stunde beträgt) die Gesamtaktivität der Proben die zulässigen Freigabewerte bisher deutlich überschreitet. Die oberflächennahen Aktivierungstiefen reichen dabei von 50 $\mu$m bis mehrere 100 $\mu$m tief in das Material.

Unter "Auflösung" ist die zuverlässige Unterscheidung unterschiedlicher Ereignisse zu verstehen, gleichbedeutend mit der Unterscheidung eines Messwertes Z1 von einem Grundmesswert Z0 in Abhängigkeit von einem Unterscheidungsparameter, wobei im Sinne der Erfindung Interpolationen zwischen den Messwerten erlaubt sind. Die Auflösung umfasst somit auch errechnete Werte zwischen den Messwerten.

"Freigabewerte" bzw. "Freigrenzen" sind von den zuständigen nationalen oder internationalen Behörden festgelegten Werte, ausgedrückt als Aktivitätskonzentrationen bzw. Gesamtaktivität, bis zu deren Erreichen radioaktive Stoffe oder radioaktive Stoffe enthaltendes Material aus einem melde- oder bewilligungspflichtigen Umgang mit radioaktiven Stoffen den Bestimmungen dieses Gesetzes nicht unterliegen. Für Österreich ist dies derzeit das 137. Bundesgesetz, mit dem das Strahlenschutzgesetz sowie das Maß- und Eichgesetz geändert werden (Strahlenschutz-EU-Anpassungsgesetz 2004, §2 (16)).

So genannte Dünnschichtaktivierungen (siehe Scherge M., Pöhlmann K., Gerve A. aaO) in der Größenordnung von ca. 20 $\mu$m Schichtdicke können aufgrund vorangegangener Erfahrungswerte (Bestrahlungswinkel und Abschirmung) umgesetzt werden, allerdings nicht durch Messverfahren mit einer hinreichenden Genauigkeit überprüft werden, und daher entspricht ein berechneter Verschleißwert nur einer Schätzung.

Die in der Literatur zitierte Messbarkeit von Verschleißraten von 1 oder 0,1 nm/h werden bis jetzt nur durch hohe Aktivierungen weit über-der Freigrenze erreicht. Diese hohen Aktivierungen können einerseits durch eine hohe Dichte von Isotopen an einer bestimmten Stelle oder durch Aktivierung einer möglichst großen Fläche mit geringer relativer Konzentration erreicht werden. Als wichtiges Merkmal ist ebenso die Menge des strömenden Umgebungsmediums (meist Schmierstoff; Öl) für die benötigte Gesamtaktivität für Auflösungen im Nanometerbereich zu nennen. Für eine festgelegte Auflösung steigt in Abhängigkeit vom Anteil des Umgebungsmediums, der für die Messung verwendet wird, die notwendige Gesamtaktivität proportional mit der Gesamtmenge des Mediums. Bei Tests nach dem Stand der Technik, welche Verschleißraten im Nanometer-pro-Stunde Bereich messen, muss der Probenkörper oberhalb der Freigabewerte aktivieren werden, weshalb meist auch das Umgebungsmedium nach der Messung als radioaktiver Stoff zu behandeln ist, wodurch aufwändige und teure Schutzmaßnahmen für das Personal während der Tests und eine ebenso aufwändige und teure Entsorgung des Umgebungsmediums nach den Tests erforderlich sind.

Zusammenfassend kann gesagt werden, dass Verschleißmessung mit radioaktiven Isotopen im Nanometerbereich (nm/h) derzeit immer mit Aktivierungen oberhalb der Freigabewerte einhergehen, vor allem deshalb, da dünnschichtige Aktivierungen für Verschleißmessungen bisher nicht verifiziert werden konnten.

Der vorliegenden Erfindung liegt somit die Aufgabe zugrunde, die Nachteile des Standes der Technik zu überwinden. Insbesondere soll mit dieser Erfindung die Möglichkeit geschaffen werden, Verschleißraten, ausgedrückt durch das Verschleißvolumen oder die Verschleißhöhe von durch Verschleiß abgetragenen Schichten von Modellteilen in einem Modelltribometer im Bereich von Kubiknanometer oder Nanometer pro Stunde online mittels radioaktiver Isotope, deren Gesamtaktivität unter den Freigabewerten liegen, zu messen. Dabei ist es notwendig, die Aktivität der Verschleißpartikel im umströmenden Medium mittels eines für die jeweilige Legierung des Probenkörpers ermittelten Tiefenprofils online (in Echtzeit) in ein(e) Verschleißvolumen, -höhe, -rate oder -menge umzurechnen, Die Genauigkeit dieses gemessenen Tiefenprofils muss hinreichend genau an der für die Verschleißmessung gewünschten Auflösung liegen, um störende Kalibrierungsfehler und Fehler bei der Umrechnung auszuschließen. Unter "hinreichend genau" ist dabei zu verstehen, dass der relative Fehler (Schwankungsbreite, Zulässigkeitsbereich) des gemessenen Tiefenprofils in derselben Größenordnung des angegebenen Verschleißwertes bzw. der Auflösung der Verschleißmessung liegen, besser jedoch diese nicht überschreiten sollte.

Weiters soll diese erfindungsgemäße Messtechnik in jedem Standardlabor, welches über keine zusätzlichen Maßnahmen zum Strahlenschutz verfügt, anwendbar sein. Wie oben bereits erwähnt, ist gesetzlich dafür der Begriff der "Freigabewerte" definiert. Dabei gilt eine Probe als nicht bewilligungspflichtig bzw. als nicht radioaktiv, solange die Summe der Aktivitäten aller Isotope relativ zu den isotopspezifischen Freigabewerten den definierten Grenzwert nicht überschreitet.

Die vorliegende Erfindung dient speziell dazu, für Aktivierungen der Referenzkörper und Probenkörper unterhalb der Freigabewerte dennoch das jeweilige Tiefenprofil mit einer entsprechenden Genauigkeit zu ermitteln, damit eine Umrechnung in Verschleißraten (Verschleißvolumen oder -höhe) im Nanometerbereich möglich ist.

Die vorliegende Erfindung löst diese Aufgabe durch:

• Bereitstellen eines Verfahrens zur Ermittlung eines Tiefenprofils der Aktivität von radioaktiven Isotopen an einem Referenzkörper gemäß den kennzeichnenden Merkmalen des Anspruchs 1;
• Bereitstellen eines Messsystems zur Ermittlung eines Tiefenprofils der Aktivität von radioaktiven Isotopen an einem Referenzkörper, der an einem oberflächennahen Aktivierungsbereich mit radioaktiven Isotopen in zumindest einer definierten Konzentrationsverteilung versehen ist, gemäß den kennzeichnenden Merkmalen des Anspruchs 7;

Vorteilhafte Ausgestaltungen der Erfindung sind in den Unteransprüchen dargelegt.

Die vorliegende Erfindung ermöglicht es zunächst, Aktivierungs-Tiefenprofile an Referenzkörpern, die unterhalb der Freigabewerte aktiviert sind, mit einer entsprechenden Genauigkeit zu ermitteln, damit eine Umrechnung in Verschleißraten (Verschleißvolumen oder -höhe) im Nanometerbereich möglich ist. Weiters bietet die vorliegende Erfindung den Vorteil einer Online-Bestimmung von Verschleißraten an tribologisch beanspruchten, mit Isotopen unterhalb der Freigrenze aktivierten Probenkörpern mit einer Genauigkeit im Nanometerbereich pro Stunde Messzeit.

Wie einleitend erwähnt, liegt bei Aktivierungen unter den Freigabewerten die Gesamtaktivität aller Isotope unter einer durch nationale oder internationale Gesetze festgelegten Grenze, bis zu deren Erreichen radioaktive Stoffe oder radioaktive Stoffe enthaltendes Material aus einem melde- oder bewilligungspflichtigen Umgang mit radioaktiven Stoffen den Bestimmungen dieser Gesetze nicht unterliegen. Diese Freigabegrenze wird z.B. für das Isotop Co57 nicht überschritten, wenn die mit dem Isotop Co57 aktivierten Referenzkörper bzw. Probenkörper in der Verwendung eine Grenze von 1 MBq, vorzugsweise 100 kBq, nicht überschreiten. Grundsätzlich lassen sich für andere Isotope äquivalente Grenzen der Gesamtaktivitäten angegeben. Die radioaktiven Isotope werden durch Kernumwandlungsprozesse (z.B. auf Grund Zusammenstoß mit einem Neutron oder schnellen geladenen Teilchen z.B. Protonen, Deuteronen oder schwereren Teilchen) aus Fe, Cr, Ni, W, Mo, Co, V, C, Mn, Si, Al, Cu, Ti, Mg, N, Zr, P, oder S erhalten.

Gemäß der Erfindung wird zunächst ein Tiefenprofil der Aktivität von radioaktiven Isotopen an einem Referenzkörper durch ein Verfahren ermittelt, das die folgenden Schritte aufweist:

a) das Versehen eines oberflächennahen Aktivierungsbereichs des Referenzkörpers mit radioaktiven Isotopen in zumindest einer definierten Konzentrationsverteilung, wobei die Aktivität aller Isotope eine Grenze von 1 MBq, vorzugsweise 100 kBq, nicht überschreitet;

b) das Abtragen einer Schicht an Material des Referenzkörpers an zumindest einem definierten Messbereich des Referenzkörpers, der sich mit dem Aktivierungsbereich zumindest überschneidet, wobei an zumindest drei Referenzmarken am Referenzkörper und/oder an einem den Referenzkörper verlagerungsfest haltenden Halter kein Materialabtrag durchgeführt wird;

c) das Bestimmen der Dicke der abgetragenen Schicht durch Vergleich mit der Lage der Referenzmarken;

d) das Bestimmen der Aktivität der abgetragenen Materialschicht durch Messen der Aktivität der radioaktiven Isotope an dem Messbereich des Referenzkörpers, vor und nach dem Abtragen der Materialschicht,

e) das Einfügen der radioaktiven Aktivitätsmesswerte und der zugehörigen Schichtdickenwerte der abgetragenen Materialschicht in ein Aktivitäts-Tiefenprofil; und

f) das Wiederholen der Schritte b-e, bis an dem zumindest einen Messbereich Material bis in eine vorbestimmte Tiefe, gemessen als Normalabstand zu einer Oberfläche abgetragen wurde, oder bis die radioaktive Restaktivität des Referenzkörpers unter eine vordefinierte Untergrenze gefallen ist.

Erfindungsgemäß erfolgt das Abtragen der Materialschichten durch Abtragen mittels Ionen, z.B. in einer Sputteranlage, da die Erfinder herausgefunden haben, dass sich die erforderlichen Genauigkeiten durch diese Methode erzielen lassen. Damit die Referenzmarken am Referenzkörper und/oder am Halter bei der Materialabtragung mittels Ionen unbeeinflusst bleiben, ist in einer bevorzugten Ausgestaltung der Erfindung vorgesehen, dass die Referenzmarken am Referenzkörper und/oder am Halter mit einer Folie, vorzugsweise aus demselben oder einem ähnlichen Material wie der Messbereich des Referenzkörpers bestehend, abgedeckt werden. Die Ionen wirken somit nur auf die Folie, und es wird somit ein homogener Schichtabtrag erzielt.

Hinreichende Genauigkeit und zufriedenstellende Messgeschwindigkeit wird erzielt, wenn die Messung der Aktivität der radioaktiven Isotope mittels eines Gammastrahlendetektors, insbesondere eines NaI-Szintillationsdetektors, erfolgt.

Zur Erzielung der erforderlichen Genauigkeit wird vorgeschlagen, dass das Bestimmen der Dicke der abgetragenen Materialschicht des Messbereichs durch Vergleich mit den Referenzmarken unter Verwendung eines 3-dimensionalen, ausreichend genauen Topographiemessgeräts, vorzugsweise eines konfokalen Mikroskops oder Interferometers erfolgt, mit dessen Hilfe eine Höhendifferenzmessung der Flächen oder der abgetragenen Schichten vorgenommen wird.

Ein erfindungsgemäßes Messsystem zur Durchführung des erfindungsgemäßen Verfahrens zur Ermittlung eines Tiefenprofils der Aktivität von radioaktiven Isotopen an einem Referenzkörper weist die folgenden Merkmale auf:

- einen Strahlungsdetektor zur Erfassung der Aktivität der radioaktiven Isotopen zumindest an einem definierten Messbereich des Referenzkörpers, wobei der Strahlungsdetektor vorzugsweise als Gammastrahlendetektor, insbesondere NaI-Szintillationsdetektor ausgebildet ist;

- eine Einrichtung zum Abtragen einer Schicht an Material des Referenzkörpers an dem zumindest einen Messbereich, wobei an zumindest drei Referenzmarken am Referenzkörper und/oder an einem den Referenzkörper verlagerungsfest haltenden Halter kein Materialabtrag erfolgt;

- ein 3-dimensionales, ausreichend genaues Topographiemessgerät zum Bestimmen der Dicke der abgetragenen Schicht durch Vergleich mit den Referenzmarken, vorzugsweise ein konfokales Mikroskop oder Interferometer, das zur Höhendifferenzmessung zwischen Messbereichen und Referenzmarken ausgebildet ist;

- wobei die Einrichtung zum Abtragen der Materialschichten als Schichtabtragsanlage mittels Ioneneinwirkung, insbesondere Sputteranlage, ausgebildet ist, in der der Referenzkörper, gegebenenfalls zusammen mit dem Halter, eingesetzt und dem Materialabtrag durch Ioneneinwirkung ausgesetzt wird.

Bei Ausbilden der Schichtabtragsanlage mittels Ioneneinwirkung als Sputteranlage werden der Referenzkörper und der Halter als Elektrode elektrisch vorgespannt und mit Ionen aus einem ionisierten Gas beschossen, so dass Atome aus dem Referenzkörper herausgeschlagen werden, ohne dass dabei ein relevante Vermischung mit dahinter liegenden, tieferen Schichten erfolgt.

Um die Referenzmarken gegenüber der Ioneneinwirkung abzudecken ist es vorteilhaft, wenn bei dem erfindungsgemäßen Messsystem zur Ermittlung eines Aktivitäts-Tiefenprofils zumindest eine Folie vorgesehen ist, die vorzugsweise elektrisch leitend ist und aus demselben oder einem ähnlichen Material wie der Messbereich des Referenzkörpers besteht, wobei die Folie in der Schichtabtragsanlage mittels Ioneneinwirkung die Referenzmarken gegenüber der Ioneneinwirkung abdeckt.

Durch die Durchführung des erfindungsgemäßen Verfahrens zur Ermittlung eines Tiefenprofils der Aktivität von radioaktiven Isotopen an einem Referenzkörper erhält man ein Aktivitäts-Tiefenprofil, das nun in einer tribometrischen, hochauflösenden Online-Verschleißbestimmung an Probenkörpern eingesetzt werden kann, wobei das Verfahren die folgenden zusätzlichen Schritte umfasst:

das Bereitstellen eines Probenkörpers, der in einem oberflächennahen Aktivierungsbereich zumindest ein radioaktives Isotop mit einer definierten Konzentrationsverteilung besitzt, wobei die Aktivität aller Isotope eine Grenze von 1 MBq, vorzugsweise 100 kBq, nicht überschreitet;
das Bereitstellen eines den Probenkörper zumindest an einer Reibfläche im Kreislauf umströmenden und gegebenenfalls tribologisch beanspruchenden Strömungsmediums, wobei sich die Reibfläche mit dem Aktivierungsbereich zumindest überschneidet;
das Messen des zeitlichen Aktivitätsverlaufs von radioaktiven Isotopen im Strömungsmedium, die durch die tribologische Beanspruchung aus dem Probenkörper in das Strömungsmedium gelangen, online während der tribologischen Beanspruchung;
die Bestimmung einer Verschleißrate des Probenkörpers durch Auswertung des zeitlichen Aktivitätsverlaufs von zumindest einem radioaktiven Isotop im Strömungsmedium;
wobei bei der Auswertung des zeitlichen Aktivitätsverlaufs von radioaktiven Isotopen im Strömungsmedium eine Referenzierung mit einem Aktivitäts-Tiefenprofil vorgenommen wird, das eine Konzentrationsverteilung der radioaktiven Isotope im makroskopischen Normalabstand zu einer Oberfläche, vorzugsweise der Reibfläche, des Probenkörpers, dargestellt als Aktivität der radioaktiven Isotope normal zur Oberfläche bzw. pro Schichtdicke, definiert. Die Messpunktabstände betragen max. 1 μm, bevorzugt max. 0,1 μm. Die solcherart erzielbare Auflösung ist jedoch deutlich höher, da eine Interpolation zwischen den Messpunkten zulässig ist. Durch die Interpolation ergibt sich die Auflösung, welche in der Größenordnung der Verschleißmessung liegt.

Für die Erzielung der erwünschten hohen Genauigkeit der Online-Verschleißbestimmung ist es wichtig, dass das Alctivitäts-Tiefenprofil an einem Referenzkörper ermittelt wurde, der aus demselben oder hinreichend ähnlichen Material wie der Probenkörper besteht und an einem oberflächennahen Aktivierungsbereich mit radioaktiven Isotopen in derselben bzw. hinreichend genau gleichen Konzentrationsverteilung im Sinne der Erreichung der genannten Auflösung versehen wurde wie der Probenkörper.

Es sei erwähnt, dass bei der tribometrischen, hochauflösenden Online-Verschleißbestimmung an Probenkörpern die zum Aktivierungsbereich des Probenkörpers gehörende Reibfläche nur einen Teil der Gesamtreibfläche des Probenkörpers darstellen muss, was das Design eines Modelltribometers wesentlich erleichtert. Es ist weiters nur erforderlich, dass die Reibfläche des Aktivierungsbereichs des Probenkörpers ein definiertes Eingriffsverhältnis aufweist, dieses Eingriffsverhältnis jedoch von 1 abweichen kann. Das Eingriffsverhältnis bezeichnet in der Tribologie die tatsächliche Flächenberührung zweier Reibflächen (bzw. einer Reibfläche und einem Strömungsmedium) zu theoretisch möglicher Flächenberührung. Beispielsweise hat der Bremsklotz einer Scheibenbremse Eingriffsverhältnis von 1 zur Bremsscheibe, d.h. die gesamte Stirnfläche des Bremsklotzes liegt an einer Bremsscheibe an, wogegen ein Wälzlager Eingriffsverhältnis von <<1 aufweist. Das Eingriffsverhältnis kann z.B. nach der ÖNORM 81-20 ermittelt werden.

Wie eingangs erwähnt, ist es bis jetzt zwar möglich gewesen, Verschleißbestimmungen im nm-Bereich durchzuführen, indem der Probenkörper weit über der Freigrenze aktiviert wurde, oder indem der Messvorgang extrem lange ausgedehnt und eine Interpolation vorgenommen wurde, die jedoch nur eine Fehlermittelung und keine tatsächlich exakte Messung darstellt, wobei man letzteres nicht als Online-Messung bezeichnen kann. Das erfindungsgemäße Verfahren zur tribometrischen, hochauflösenden Online-Verschleißbestimmung an Probenkörpern sieht jedoch in einer bevorzugten Ausgestaltung vor, dass die Messzeit für die Unterscheidbarkeit von ≤ 10 nm, vorzugsweise ≤ 1 nm, der Aktivität von radioaktiven Isotopen im Strömungsmedium innerhalb eines Zeitraums von 60 Minuten, vorzugsweise unter 15 Minuten, liegt. Bevorzugt ist für die Unterscheidbarkeit der Aktivität die Auflösung mit von ≤ 10 nm/h, vorzugweise ≤ 1 nm/h, festgelegt, wobei der Fehler maximal 100% de Messwertes betragen darf.

Die Messanordnung zur tribometrischen, hochauflösenden Online-Verschleißbestimmung an zumindest einem Probenkörper, der in einem oberflächennahen Aktivierungsbereich zumindest ein radioaktives Isotop mit einer definierten Konzentrationsverteilung besitzt, wobei die Aktivität aller Isotope eine Grenze von 1 MBq, vorzugsweise 100 kBq, nicht überschreitet, umfasst ein Kreislaufsystem, in dem ein Strömungsmedium strömen gelassen wird, wobei der Probenkörper zumindest an einer Reibfläche im Kreislaufsystem angeordnet ist, die sich mit dem Aktivierungsbereich zumindest überschneidet und vom Strömungsmedium umströmt wird, wobei die Reibfläche gegebenenfalls tribologisch beansprucht wird;
einen Strahlungsdetektor zum Erfassen des zeitlichen Aktivitätsverlaufs von radioaktiven Isotopen im Strömungsmedium, die durch die tribologische Beanspruchung des Probenkörpers in das Strömungsmedium gelangen, online während der tribologischen Beanspruchung der Reibfläche;
eine Auswerteeinheit zur Bestimmung einer Verschleißrate des Probenkörpers durch Auswertung des zeitlichen Aktivitätsverlaufs von radioaktiven Isotopen im Strömungsmedium, wobei die Auswerteeinheit bei der Bestimmung des zeitlichen Aktivitätsverlaufs von radioaktiven Isotopen im Strömungsmedium eine Referenzierung mit einem Aktivitäts-Tiefenprofil vornimmt, das eine Konzentrationsverteilung der radioaktiven Isotopen im makroskopischen Normalabstand zu einer Oberfläche des Probenkörpers, vorzugsweise in einem Messpunktabstand von ≤ 1 μm, bevorzugt ≤ 0,1 μm, dargestellt als Aktivität der radioaktiven Isotopen normal zur Oberfläche bzw. pro Schichtdicke, definiert.

Im Gegensatz zu bekannten tribometrischen Messanordnungen, bei denen nur ein Teil des Strömungsmediums zur Messung verwendet und dadurch die Genauigkeit verschlechtert wird, ist in einer Ausgestaltung der vorliegenden Messanordnung eine in den Strömungskreislauf geschaltete Messstrecke vorgesehen, z.B. ein Behälter oder ein Rohrabschnitt, wobei der Strahlungsdetektor zum Erfassen des zeitlichen Aktivitätsverlaufs von radioaktiven Isotopen derart angeordnet ist, dass das gesamte Volumen der in der Messstrecke befindlichen Menge des Strömungsmediums der Aktivitätsmessung zugänglich ist, wobei vorzugsweise das zu messende Strömungsmedium überwiegend von dem Strahlungsdetektor umschlossen wird.

Zur weiteren Erhöhung der Messgenauigkeit der Messanordnung trägt bei, wenn das Gesamtvolumen des im Kreislaufsystem befindlichen Strömungsmediums weniger als 1 Liter, vorzugsweise weniger als 200 ml, beträgt und/oder wenn das Aufnahmevolumen der Messstrecke für das Strömungsmedium zumindest 50% des Gesamtvolumens des im Kreislaufsystem befindlichen Strömungsmediums beträgt.

Die Erfindung wird nun anhand von nicht einschränkenden Ausführungsbeispielen unter Bezugnahme auf die Zeichnungen näher erläutert. In den Zeichnungen zeigen:

Fig. 1 einen Längsschnitt durch einen Referenzkörper und einen den Referenzkörper umgebenden Halter;
Fig. 2 ein Diagramm, das ein erfindungsgemäß ermitteltes Aktivitäts-Tiefenprofil darstellt;
Fig. 3 eine schematische Darstellung einer Sputteranlage mit einem darin behandelten Referenzkörper;
Fig. 4 eine schematische Darstellung einer tribometrischen Messanordnung.

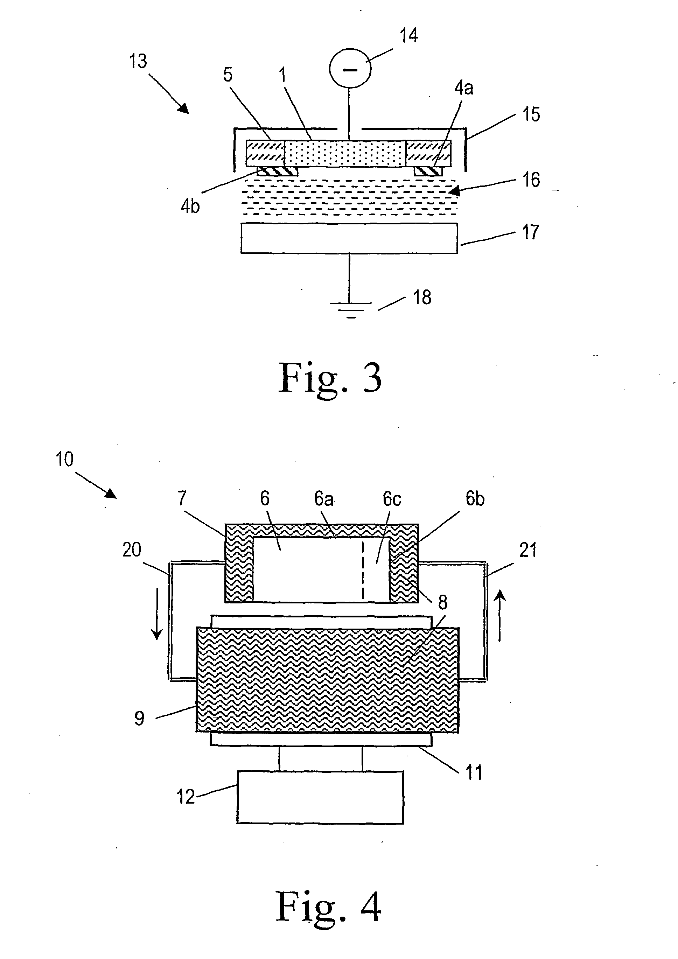

Die Grundidee einer Verschleißmessung bei tribologischen Prozessen mit Hilfe von radioaktiven Isotopen ist es, eine dünne (z.B. zwischen 20 $\mu$m und einigen hundert $\mu$m) oberflächennahe Schicht 6c eines zu untersuchenden, in Fig. 4 dargestellten Probenkörpers 6 mit radioaktiven Isotopen zu versehen. Die Isotopen können durch Implantation in den Probenkörper eingebracht werden. Alternativ dazu erfolgt eine Aktivierung von im Probenkörper befindlichen Kernen durch Kernreaktionen durch schwere geladene Teilchen (Protonen- oder Deuteronenbestrahlung), d.h. die Probe wird in einem Teilchenbeschleuniger bestrahlt und es kommt zu einer Kernreaktion. Im vorliegenden Ausführungsbeispiel ist vorgesehen, die Eisenatome ($^{56}$Fe) eines Stahltyps, aus dem der Probenkörper 6 besteht, durch Deuteronenbeschuss zu $^{57}$Co umzuwandeln [$^{56}$Fe(d,n)$^{57}$Co], welches mit einer Halbwertszeit von 271 Tagen unter Emission von Gammastrahlung in den Grundzustand übergeht. Nach der erfolgten Aktivierung besitzt der Probenkörper 6 eine bestimmte Gesamtaktivität und ein bestimmtes Aktivitäts-Tiefenprofil, d.h. einen Verlauf der spezifischen Aktivität mit dem Normalabstand zur Oberfläche.

Es sei darauf hingewiesen, dass im Gegensatz zum Stand der Technik bei der vorliegenden Erfindung der Probenkörper 6 nur solcherart mit einem radioaktiven Isotop aktiviert wird, dass bei der Verwendung die Gesamtaktivität aller Isotope eine Grenze von 1 MBq, vorzugsweise 100 kBq, nicht überschreitet. In anderen Worten, liegt die Aktivierung des Probenkörpers 6 unter den gesetzlichen Freigabewerten. Die radioaktiven Isotope werden durch Kernumwandlungsprozesse (z.B. auf Grund Zusammenstoß mit einem Neutron oder schnellen geladenen Teilchen z.B. Protonen, Deuteronen oder schwereren Teilchen) aus Fe, Cr, Ni, W, Mo, Co, V, C, Mn, Si, Al, Cu, Ti, Mg, N, Zr, P, oder S erhalten.

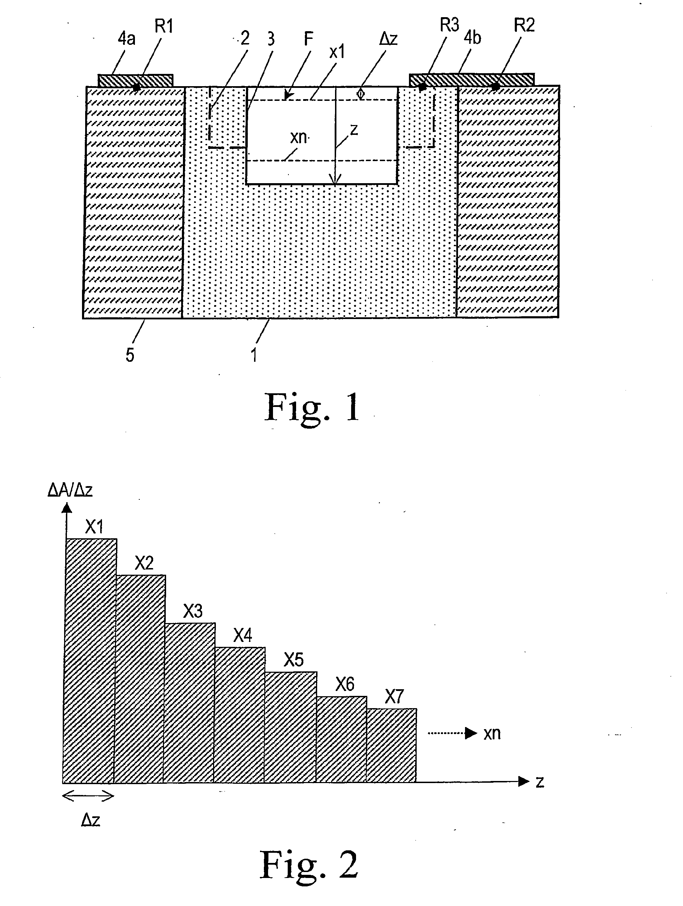

Eine Verschleißbestimmung mit höchster Auflösung kann nur bei exakter Kenntnis des Aktivitäts-Tiefenprofils erreicht werden. Dazu ist es notwendig dieses Profil experimentell mit ausreichender Genauigkeit an einem Referenzkörper aus gleichem Material, d.h. im vorliegenden Fall Stahl, zu ermitteln. Fig. 1 zeigt einen solchen Referenzkörper 1 im Längsschnitt, wobei der Referenzkörper 1 zylindrisch oder prismatisch aufgebaut ist. Der Referenzkörper 1 wird in einem oberflächennahen Aktivierungsbereich 2 mit radioaktiven Isotopen in zumindest einer definierten Konzentrationsverteilung versehen, wobei die Aktivität aller Isotope eine Grenze von 1 MBq, vorzugsweise 100 kBq, nicht überschreitet. Der Aktivierungsbereich 2 erstreckt sich in diesem Ausführungsbeispiel nur über einen Teil der oberen Stirnfläche des Referenzkörpers 1; dies ist jedoch für die Erfindung unerheblich.

Der Referenzkörper 1 ist mittels Presspassung verlagerungsfest in einem Halter 5 festgeklemmt, wobei drei Referenzmarken R1, R2, R3 festgelegt sind, die eine 3-dimensionale Lagebestimmung ermöglichen. Zwei der Referenzmarken R1, R2 befinden sich auf der oberen Stirnfläche des Halters 5, eine Referenzmarke R3 befindet sich auf der oberen Stirnfläche des Referenzkörpers 1, wobei es unerheblich ist, ob sich die Referenzmarke R3 im Aktivierungsbereich 2 oder außerhalb davon befindet. Es sei jedoch darauf hingewiesen, dass es in der Praxis Vorteile hat, alle drei Referenzmarken auf dem Halter 5 zu definieren, wie weiter unten näher erläutert wird.

Zunächst wird an der Anordnung aus Referenzkörper 1 und Halter 5 die Aktivität der radioaktiven Isotope an zumindest einem Messbereich 3 des Referenzkörpers 1 bestimmt. Dies erfolgt vorzugsweise mittels eines Gammastrahlendetektors, insbesondere eines NaI-Szintillationsdetektors. Es sei darauf hingewiesen, dass der Aktivierungsbereich 2 und der Messbereich 3 einander zwar überschneiden, aber nicht notwendigerweise zusammenfallen müssen.

Als nächstes wird eine Schicht x1 an Material des Referenzkörpers 1 an dem Messbereich 3 des Referenzkörpers 1 abgetragen, wobei die Schichtdicke $\Delta z$ der abgetragenen Schicht x1 je nach erwünschter Genauigkeit des Aktivitäts-Tiefenprofils möglichst gering sein sollte. Die Querschnittsfläche des Messbereichs 3, die der Querschnittsfläche der abgetragenen Schicht x1 entspricht, ist mit dem Bezugszeichen F bezeichnet.

Wesentlich ist, dass an den drei Referenzmarken R1, R2, R3 kein Materialabtrag bzw. keine Veränderung durchgeführt wird. Dies wird erreicht, indem die Referenzmarken R1, R2, R3 durch Abdecken mit einer Folie 4a, 4b, die vorzugsweise aus demselben oder einem ähnlichen Material wie der Referenzkörper 1 besteht, zum Schutz vor Abtragen abgedeckt werden. Es ist dabei zu beachten, dass bei Aufbringen der Folie 4b am Referenzkörper 1 eventuell inhomogene Feldverteilungen und/oder "Etching"-Effekte am Übergang auftreten, weshalb es bevorzugt ist, die Referenzpunkte am Halter 5 anzuordnen, so dass nur der Halter 5 teilweise abgedeckt werden muss (siehe Folie 4a, die den Referenzpunkt R1 abdeckt).

In einem nächsten Schritt wird die Dicke $\Delta z$ der abgetragenen Schicht x1 durch Vergleich mit der Lage der Referenzmarken R1, R2, R3 bestimmt.

In einem nächsten Schritt wird die Radioaktivität des Messbereichs 3 erneut bestimmt, woraus auch die Aktivitätsdifferenz vor und nach dem Abtragen der Materialschicht x1 ableitbar ist. Die gemessenen Aktivitätsmesswerte und die zugehörigen Schichtdickenwerte Δz der abgetragenen Materialschicht x1 werden in ein Aktivitäts-Tiefenprofil eingetragen, das in Fig. 2 als Diagramm dargestellt ist.

Die Verfahrensschritte des Abtragens von Materialschichten x2 - x7 ... xn, des Bestimmens der Dicke Δz der abgetragenen Schichten x2 - x7 ... xn durch Vergleich mit der Lage der Referenzmarken R1, R2, R3, des Bestimmens der Aktivität der abgetragenen Materialschicht x2 - x7 ... xn durch Messen der Aktivität der radioaktiven Isotope an dem Messbereich 3 des Referenzkörpers 1 vor und nach dem Abtragen der Materialschicht, und des Einfügens der radioaktiven Aktivitätsmesswerte und der zugehörigen Schichtdickenwerte der abgetragenen Materialschichten in das Aktivitäts-Tiefenprofil werden wiederholt, bis an dem Messbereich 3 Material bis in eine vorbestimmte Tiefe z, gemessen als Normalabstand zu einer Oberfläche bzw. Referenzmarke abgetragen wurde, oder bis die radioaktive Restaktivität des Referenzkörpers 1 unter eine vordefinierte Untergrenze gefallen ist.

Bei dem in Fig. 2 dargestellten Aktivitäts-Tiefenprofil stellt die Fläche eines jeweiligen Rechteckes die während eines Abtragsvorganges abgetragene Aktivität der einzelnen Schichten x1 - x7 ... xn dar; die Höhe der Rechtecke korrespondieren mit den erhaltenen Aktivitätsmesswerten.

Das Abtragen der Materialschichten x1 - x7 ... xn erfolgt durch Abtragen mittels Ionen, vorzugsweise in einer Sputteranlage. Eine solche Sputteranlage 13 ist in Fig. 3 schematisch dargestellt. Die Sputteranlage 13 besteht im wesentlichen aus zwei Elektroden, und zwar einer Anode 17, die mit Masse-Potential 18 verbunden ist und einer Kathode, die mit negativem Potential 14 elektrisch vorgespannt ist, wobei gemäß der vorliegenden Erfindung der Referenzkörper 1 mithilfe des Halters 5 als Kathode eingesetzt wird. Man erkennt in der Zeichnung auch die Folien 4a, 4b. In dem Zwischenraum zwischen der Anode 17 und dem als Kathode wirkenden Referenzkörper 1 befindet sich ein vorzugsweise reines Gas 16. Wird zwischen den beiden Elektroden eine Hochspannung angelegt kommt es zur Ionisation des Gases. In Folge werden die entstandenen Ionen in Richtung Kathode, d.h. Referenzkörper 1 beschleunigt, wo sie auftreffen und Atome aus dem Referenzkörper 1 und dem Halter 5 frei schlagen, ausgenommen dort, wo sich die Folien 4a, 4b befinden, die als Schutzschild gegen die Ionen dienen. Eine geerdete Abschirmung 15 umgibt teilweise den Referenzkörper 1 und verhindert, dass die Ionen über den Referenzkörper 1 hinausfliegen. Durch Einstellparameter wie Gasdruck, Gasart und Strom-Spannungscharakteristik kann der Sputterprozess und somit die Dicke der abgetragenen Materialschicht geregelt werden. Weiters wird bei der gewählten Einstellung gewährleistet, dass nur wenige Atomlagen während des Sputterprozesses beeinflusst werden, und damit eine "Vermischung" radioaktiver Isotope aus höher aktivierten Schichten mit weniger aktivierten Schichten nicht bzw. in einer für die Ermittlung des Tiefenprofils irrelevanten Größenordnung (wenige Atomlagen) stattfindet.

Durch das mehrmalige Abtragen diskreter Schichten kann so das gesamte Aktivitäts-Tiefenprofil mit Messpunktabständen (Schrittweite bzw. Dicke der abgetragenen Schicht zwischen zwei Messpunkten) kleiner als 0,5 μm gemessen werden. Da eine Interpolation zwischen den Messpunktabständen zulässig ist, ist die erzielbare Auflösung noch deutlich besser und liegt in der Größenordnung der Verschleißmessung, d.h. im nm Bereich. Im Vergleich dazu beträgt die Genauigkeit bei der bekannten Folienmethode mindestens 5 μm; bei nach dem Stand der Technik abgeriebenen/abpolierten Schichten beträgt die Genauigkeit ebenfalls nur mehrere Mikrometer bei gleichzeitiger Vermischung der Schichten im Mikrometerbereich. Bei der Folienmethode wird ein Stapel dünner (weniger μm) Folien mit Protonen oder Deuteronen in einem Zyklotron bestrahlt. Die Dicke dieser Folien wird gemessen. Zur Bestimmung des Tiefenprofils werden nach und nach die einzelnen Folien entfernt und nach jedem Schritt die Restaktivität gemessen. Nachteil: Reflexions- und Brechungserscheinungen bei der Bestrahlung erlauben nur eine ungenaue Darstellung des Tiefenprofils eines Festkörpers. Bei der Abriebmethode wird das Material mittels mechanischem Abrieb vom Probenkörper entfernt und die Restaktivität im Anschluss an jeden Schritt gemessen. Nachteil: Vermischung der oberflächennahen Materialschichten im μm-Bereich und demzufolge eine Verzerrung des erhaltenen Tiefenprofils.

Wenn das Aktivitäts-Tiefenprofil des Referenzkörpers 1 bestimmt ist, kann die Verschleißmessung an dem Probenkörper 6 stattfinden. Fig. 4 zeigt schematisch eine tribometrische Messanordnung 10 zur tribometrischen, hochauflösenden Online-Verschleißbestimmung an zumindest einem Probenkörper 6. Der Probenkörper weist in einem oberflächennahen Aktivierungsbereich 6c zumindest ein radioaktives Isotop mit einer definierten Konzentrationsverteilung auf, wobei die Aktivität aller Isotope eine Grenze von 1 MBq, vorzugsweise 100 kBq nicht überschreitet. Allgemein gesprochen ist der Probenkörper 6 in einem Kreislaufsystem angeordnet, in dem ein Strömungsmedium 8 strömen gelassen wird. In der vorliegenden Ausführungsform umfasst dieses Kreislaufsystem einen den Probenkörper 6 aufnehmenden Prüfbehälter 7, eine Strömungsmedium-Zuführleitung 21, eine Strömungsmedium-Abfuhrleitung 20 und eine Messstrecke 9. Das Strömungsmedium 8 ist z.B. ein Schmierstoff, der den Probenkörper 6 umströmt und Verschleißpartikel des Probenkörpers 6 transportiert und gegebenenfalls diesen auch tribologisch beansprucht. Der Probenkörper 6 ist so im Prüfbehälter 7 angeordnet, dass er an einer stirnseitigen Reibfläche 6b und einer Umfangs-Reibfläche 6a vom Strömungsmedium 8 umströmt und dabei die Reibflächen 6a, 6b gegebenenfalls tribologisch beansprucht werden. Dabei überschneidet sich bei diesem Ausführungsbeispiel die Reibfläche 6a nur teilweise mit dem Aktivierungsbereich 6c, wogegen die stirnseitige Reibfläche 6b mit dem Aktivierungsbereich zusammenfällt. Daraus lässt sich ein Eingriffsverhältnis zwischen aktivierter Reibfläche zur Gesamt-Reibfläche errechnen, das für die Verscbleißratenbestimmung herangezogen wird.

Während der tribologischen Beanspruchung des Probenkörpers 6 kommt es zu einem Materialabtrag vom Probenkörper 6 in Form von Verschleißpartikeln. In weiterer Folge werden die abgetragenen Verschleißartikel durch die Strömungsmedium-Abfuhrleitung 20 in die Messstrecke 9 abtransportiert. Verschleißpartikel, die von Reibflächen(anteilen) stammen, die mit der Aktivierungszone 6a des Probenkörpers zusammenfallen, sind sind mit radioaktiven Isotopen besetzt. Ein Strahlungsdetektor 11 erfasst den zeitlichen Aktivitätsverlaufs von mit radioaktiven Isotopen beladenen Verschleißpartikeln im Strömungsmedium 8 in der Messstrecke 9, wobei der Strahlungsdetektor 11 die Messstrecke 9 umgibt, so dass mehr als 40% der ausgesendeten Strahlung direkt auf den Detektor trifft und gemessen werden kann (nahezu 2 PI Geometrie oder mehr). Die Messstrecke 9 kann beispielsweise als Behälter oder Rohrabschnitt ausgebildet sein.

Eine Auswerteeinheit 12 zur Bestimmung einer Verschleißrate des Probenkörpers 6 steht mit dem Strahlungsdetektor 11 in Verbindung, so dass die Verschleißratenbestimmung durch Auswertung des zeitlichen Aktivitätsverlaufs von radioaktiven Isotopen im Strömungsmedium vorgenommen werden kann, wobei die Auswerteeinheit 12 bei der Bestimmung des zeitlichen Aktivitätsverlaufs von radioaktiven Isotopen im Strömungsmedium eine Referenzierung mit einem Aktivitäts-Tiefenprofil vornimmt, das eine Konzentrationsverteilung der radioaktiven Isotopen im makroskopischen Normalabstand zu einer Oberfläche des Probenkörpers 6 in einem Messpunktabstand von $\leq 1\,\mu m$, bevorzugt $\leq 0,1\,\mu m$, dargestellt als Aktivität der radioaktiven Isotopen normal zur Oberfläche bzw. pro Schichtdicke, definiert. Die von der Auswerteeinheit 12 vorgenommene Verschleißratenbestimmung unter Verwendung des durch einen zum Probenkörper 6 äquivalenten Referenzkörpers 1 bestimmten Tiefenprofils gibt die Verschleißrate durch eine Verschleißkenngröße, wie z.B. Verschleißhöhe, -volumen, -menge oder -rate des aktivierten Probenkörpers 6 an. Durch diese Korrelation zwischen Referenzkörper 1 und Probenkörper 6 über das Tiefenprofil ist die Umrechung in online Verschleißwerte während eines Modelltest möglich.

Die Messanordnung 10 ist so ausgelegt, dass das Gesamtvolumen des im Kreislaufsystem befindlichen Strömungsmediums 8 weniger als 1 Liter, vorzugsweise weniger als 200 ml, beträgt. Weiters ist das Aufnahmevolumen der Messstrecke 9 für das Strömungsmedium 8 so bemessen, dass sich zumindest 50% des Gesamtvolumens des im Kreislaufsystem befindlichen Strömungsmediums 8 in der Messstrecke 9 befinden.

Es sei erwähnt, dass die Erfindung auch vorsieht, die Größe der teilaktivierten Zone an Probenkörpern 6 zu variieren, wodurch es möglich ist, flachere bzw. steilere Konzentrationsverläufe zu erhalten und die Reibfläche des aktivierten Volumenbereiches zu verändern.

Weiters kann die Auswerteeinheit 12 der Messanordnung 10 die Referenzierung der Verschleißrate auf eine mathematische Funktion beziehen, welche vorab durch die Tiefenprofilermittlung bestimmt wird.

**Patentansprüche**

1. Verfahren zur Ermittlung eines Tiefenprofils der Aktivität von radioaktiven Isotopen an einem Referenzkörper (1), umfassend:

   a) das Versehen eines oberflächennahen Aktivierungsbereichs (2) des Referenzkörper (1) mit radioaktiven Isotopen in zumindest einer definierten Konzentrationsverteilung, wobei die Aktivität aller Isotope eine Grenze von 1 MBq, vorzugsweise 100 kBq, nicht überschreitet;
   b) das Abtragen einer Schicht (x1-x7 ... xn) an Material des Referenzkörpers an zumindest einem definierten Messbereich (3) des Referenzkörpers, der sich mit dem Aktivierungsbereich (2) zumindest überschneidet, wobei an zumindest drei Referenzmarken (R1, R2, R3) am Referenzkörper (1) und/oder an einem den Referenzkörper verlagerungsfest haltenden Halter (5) kein Materialabtrag durchgeführt wird;
   c) das Bestimmen der Dicke ($\Delta z$) der abgetragenen Schicht (x1-x7 ... xn) durch Vergleich mit der Lage der Referenzmarken (R1, R2, R3);
   d) das Bestimmen der Aktivität (A) der abgetragenen Materialschicht (x1-x7 ... xn) durch Messen der Aktivität der radioaktiven Isotope an dem Messbereich (3) des Referenzkörpers, vor und nach dem Abtragen der Materialschicht,
   e) das Einfügen der radioaktiven Aktivitätsmesswerte (A) und der zugehörigen Schichtdickenwerte ($\Delta z$) der abgetragenen Materialschicht (x1-x7 ... xn) in ein Aktivitäts-Tiefenprofil; und
   f) das Wiederholen der Schritte b-e, bis an dem zumindest einen Messbereich (3) Material bis in eine vorbestimmte Tiefe (z), gemessen als Normalabstand zu einer Oberfläche des Referenzkörpers abgetragen wurde, oder bis die radioaktive Restaktivität des Referenzkörpers unter eine vordefinierte Untergrenze gefallen ist, **dadurch gekennzeichnet, dass** das Abtragen der Materialschichten (x1-x7 ... xn) durch Abtragen mittels Ionen, z.B. in einer Sputteranlage, erfolgt.

**2.** Verfahren zur Ermittlung eines Aktivitäts-Tiefenprofils nach Anspruch 1, **dadurch gekennzeichnet, dass** die Referenzmarken (R1, R2, R3) am Referenzkörper und/oder am Halter mit einer Folie (4a, 4b), vorzugsweise aus demselben oder einem ähnlichen Material wie der Messbereich des Referenzkörpers bestehend, abgedeckt werden.

**3.** Verfahren zur Ermittlung eines Aktivitäts-Tiefenprofils nach einem der Ansprüche 1 oder 2, **dadurch gekennzeichnet, dass** die Messung der Aktivität (A) der radioaktiven Isotope mittels eines Gammastrahlendetektors, insbesondere eines NaI-Szintillationsdetektors, erfolgt.

**4.** Verfahren zur Ermittlung eines Aktivitäts-Tiefenprofils nach einem der Ansprüche 1 bis 3, **dadurch gekennzeichnet, dass** das Bestimmen der Dicke ($\Delta z$) der abgetragenen Materialschicht des Messbereichs durch Vergleich mit den Referenzmarken unter Verwendung eines 3-dimensionalen, ausreichend genauen Topographiemessgeräts, vorzugsweise eines konfokalen Mikroskops oder Interferometers erfolgt, mit dessen Hilfe eine Höhendifferenzmessung der Flächen oder der abgetragenen Schichten vorgenommen wird.

**5.** Verfahren zur Ermittlung eines Aktivitäts-Tiefenprofils nach einem der Ansprüche 1 bis 4, **dadurch gekennzeichnet, dass** die radioaktiven Isotope durch Kernumwandlungsprozesse aus Fe, Cr, Ni, W, Mo, Co, V, C, Mn, Si, Al, Cu, Ti, Mg, N, Zr, P, oder S erhalten werden.

**6.** Verfahren zur Ermittlung eines Aktivitäts-Tiefenprofils nach einem der Ansprüche 1 bis 5, **dadurch gekennzeichnet, dass** die Schichten (x1-x7 ... xn) an Material des Referenzkörpers an zumindest einem definierten Messbereich (3) des Referenzkörpers in Dicken von maximal 1 $\mu$m, vorzugsweise maximal 0,5 $\mu$m, abgetragen werden.

**7.** Messsystem zur Ermittlung eines Tiefenprofils der Aktivität von radioaktiven Isotopen an einem Referenzkörper (1), der an einem oberflächennahen Aktivierungsbereich (2) mit radioaktiven Isotopen in zumindest einer definierten Konzentrationsverteilung versehen ist, wobei die Aktivität aller Isotope eine Grenze von 1 MBq, vorzugsweise 100 kBq, nicht überschreitet, umfassend:

- einen Strahlungsdetektor zur Erfassung der Aktivität der radioaktiven Isotopen zumindest an einem definierten Messbereich des Referenzkörpers, wobei der Strahlungsdetektor vorzugsweise als Gammastrahlendetektor, insbesondere NaI-Szintillationsdetektor ausgebildet ist;
- eine Einrichtung zum Abtragen einer Schicht an Material des Referenzkörpers an dem zumindest einen Messbereich (3), wobei an zumindest drei Referenzmarken (R1, R2, R3) am Referenzkörper und/oder an einem den Referenzkörper verlagerungsfest haltenden Halter kein Materialabtrag erfolgt;
- ein 3-dimensionales, ausreichend genaues Topographiemessgerät zum Bestimmen der Dicke ($\Delta z$) der abgetragenen Schicht durch Vergleich mit den Referenzmarken, vorzugsweise ein konfokales Mikroskop oder Interferometer, das zur Höhendifferenzmessung zwischen Messbereichen und Referenzmarken ausgebildet ist;
**dadurch gekennzeichnet, dass**
die Einrichtung zum Abtragen der Materialschichten als Schichtabtragsanlage mittels Ioneneinwirkung, insbesondere Sputteranlage (13), ausgebildet ist, in der der Referenzkörper (1), gegebenenfalls zusammen mit dem Halter (5), eingesetzt und dem Materialabtrag durch Ioneneinwirkung ausgesetzt wird.

**8.** Messsystem zur Ermittlung eines Aktivitäts-Tiefenprofils nach Anspruch 7, **dadurch gekennzeichnet dass** zumindest eine Folie (4a, 4b) vorgesehen ist, die vorzugsweise elektrisch leitend ist und aus demselben oder einem ähnlichen Material wie der Messbereich (3) des Referenzkörpers (1) besteht, wobei die Folie (4a, 4b) in der Schichtabtragsanlage mittels Ioneneinwirkung die Referenzmarken (R1, R2, R3) gegenüber der Ioneneinwirkung abdeckt.

**9.** Verfahren zur tribometrischen, hochauflösenden Online-Verschleißbestimmung an Probenkörpern (6), umfassend:

das Bereitstellen eines Probenkörpers (6), der in einem oberflächennahen Aklivierungsbereich (6c) zumindest ein radioaktives Isotop mit einer definierten Konzentrationsverteilung besitzt, wobei die Aktivität aller Isotope eine Grenze von 1 MBq, vorzugsweise 100 kBq, nicht überschreitet;
das Bereitstellen eines den Probenkörper zumindest an einer Reibfläche (6a, 6b) im Kreislauf umströmenden, Verschleißpartikel transportierenden und gegebenenfalls tribologisch beanspruchenden Strömungsmediums (8), wobei sich die Reibfläche (6a, 6b) mit dem Aktivierungsbereich (6c) zumindest überschneidet;
das Messen des zeitlichen Aktivitätsverlaufs von radioaktiven Isotopen im Strömungsmedium (8), die durch die tribologische Beanspruchung aus dem Probenkörper in das Strömungsmedium gelangen, online während der tribologischen Beanspruchung;
die Bestimmung einer Verschleißrate des Probenkörpers durch Auswertung des zeitlichen Aktivitätsverlaufs von zumindest einem radioaktiven Isotop im Strömungsmedium; **dadurch gekennzeichnet, dass** bei der Auswertung des zeitlichen Aktivitätsverlaufs von radioaktiven Isotopen im Strömungsmedium eine Referenzierung mit einem Aktivitäts-Tiefenprofil vorgenommen wird, das eine Konzentrationsverteilung der radioaktiven Isotope im makroskopischen Normalabstand zu einer Oberfläche, vorzugsweise der Reibfläche, des Probenkörpers, dargestellt als Aktivität der radioaktiven Isotope normal zur Oberfläche bzw. pro Schichtdicke, definiert, wobei das Aktivitäts-Tiefenprofil an einem Referenzkörper (1) ermittelt wird, der aus demselben oder hinreichend ähnlichen Material wie der Probenkörper (6) besteht und an einem oberflächennahen Aktivierungsbereich (2) mit radioaktiven Isotopen in derselben bzw. hinreichend genau gleichen Konzentrationsverteilung versehen wurde wie der Probenkörper, wobei das Aktivitäts-Tiefenprofil gemäß dem Verfahren nach einem der Ansprüche 1 bis 4 ermittelt wird.

10. Verfahren zur tribometrischen, hochauflösenden Online-Verschleißbestimmung an Probenkörpern nach Anspruch 9, **dadurch gekennzeichnet, dass** die den Aktivierungsbereich (6c) des Probenkörpers (6) überschneidende Reibfläche (6a, 6b) nur einen Teil der Gesamttreibfläche des Probenkörpers darstellt.

11. Verfahren zur tribometrischen, hochauflösenden Online-Verschleißbestimmung an Probenkörpern nach Anspruch 10, **dadurch gekennzeichnet, dass** die Reibfläche (6a, 6b) des Aktivierungsbereichs (6c) des Probenkörpers ein definiertes Eingriffsverhältnis aufweist.

12. Verfahren zur tribometrischen, hochauflösenden Online-Verschleißbestimmung an Probenkörpern nach einem der Ansprüche 9 bis 11, **dadurch gekennzeichnet, dass** die Messzeit für die Unterscheidbarkeit von $\leq 10$ nm, vorzugsweise $\leq 1$ nm, der Aktivität von radioaktiven Isotopen im Strömungsmedium (8) innerhalb eines Zeitraums von 60 Minuten, vorzugsweise unter 15 Minuten, liegt.

13. Verfahren zur tribometrischen, hochauflösenden Online-Verschleißbestimmung an Probenkörpern nach Anspruch 12, **dadurch gekennzeichnet, dass** für die Unterscheidbarkeit der Aktivität die Auflösung mit $\leq 10$ nm/h, vorzugsweise $\leq 1$ nm/h, festgelegt ist, wobei der Fehler maximal 100% des Messwertes betragen darf.

14. Verfahren zur tribometrischen, hochauflösenden Online-Verschleißbestimmung an Probenkörpern nach einem der Ansprüche 9 bis 13, **dadurch gekennzeichnet, dass** die radioaktiven Isotope durch Kernumwandlungsprozesse aus Fe, Cr, Ni, W, Mo, Co, V, C, Mn, Si, Al, Cu, Ti, Mg, N, Zr, P, oder S erhalten werden.

**Claims**

1. A method for determining a depth profile of the activity of radioactive isotopes on a reference body (1), comprising:

   a) providing an activation area (2) of the reference body (1) situated close to its surface with radioactive isotopes with at least one defined concentration distribution, the activity of all isotopes not exceeding a limit of 1 MBq, preferably 100 kBq;
   b) removing a layer (x1-x7 ... xn) of material of the reference body in at least one defined measurement area (3) of the reference body that at least overlaps the activation area (2), wherein no material is removed at at least three reference marks (R1, R2, R3) on the reference body (1) and/or on a holder (5) holding the reference body in an undisplaceable manner;
   c) determining the thickness ($\Delta z$) of the removed layer (x1-x7 ... xn) by comparison with the position of the reference marks (R1, R2, R3);
   d) determining the activity (A) of the removed material layer (x1-x7 ... xn) by measuring the activity of the radioactive isotopes in the measurement area (3) of the reference body before and after removal of the material layer;
   e) entering the radioactive activity measurement values (A) and the corresponding thickness values ($\Delta z$) of the removed material layer (x1-x7 ... xn) into an activity depth profile; and
   f) repeating steps b-e until in the at least one measurement area (3) material has been removed down to a predetermined depth (2), measured as perpendicular distance to a surface of the reference body, or until the radioactive residual activity of the reference body has fallen below a predetermined lower limit, **characterized in that** the removal of the material layer (x1-x7 ... xn) is achieved by removal by means of ions, e.g. in a sputtering system.

2. The method for determining an activity depth profile according to claim 1, **characterized in that** the reference marks (R1, R2, R3) on the reference body and/or on the holder are covered with a sheet (4a, 4b), preferably of the same or a similar material as the measurement area of the reference body.

3. The method for determining an activity depth profile according to claims 1 or 2, **characterized in that** measuring the activity (A) of the radioactive isotopes is conducted by means of a gamma radiation detector, especially a NaI scintillation detector.

4. The method for determining an activity depth profile according to one of the claims 1 to 3, **characterized in that** determining the thickness (Δz) of the removed material layer of the measurement area is conducted by comparison with the reference marks using a 3-dimensional topography measuring device with sufficient accuracy, preferably a confocal microscope or interferometer, by means of which a height difference measurement of the surfaces or of the removed layers is conducted.

5. The method for determining an activity depth profile according to one of the claims 1 to 4, **characterized in that** the radioactive isotopes are obtained by nuclear transformation processes from Fe, Cr, Ni, W, Mo, Co, V, C, Mn, Si, Al, Cu, Ti, Mg, N, Zr, P or S.

6. The method for determining an activity depth profile according to one of the claims 1 to 5, **characterized in that** in at least one defined measurement area (3) of the reference body, the layers (x1-x7 ... xn) of material of the reference body are removed with a maximum thickness of 1 μm, preferably a maximum of 0.5 μm.

7. A measuring system for determining a depth profile of the activity of radioactive isotopes on a reference body (1), which is provided with radioactive isotopes with at least one defined concentration distribution in an activation area (2) situated close to its surface, the activity of all isotopes not exceeding a limit of 1 MBq, preferably 100 kBq, comprising:

   - a radiation detector for determining the activity of the radioactive isotopes at least in one defined measurement area of the reference body, the radiation detector preferably being a gamma radiation detector, especially a NaI scintillation detector;
   - a device for removing a layer of material of the reference body in the at least one measurement area (3), wherein no material is removed at at least three reference marks (R1, R2, R3) on the reference body (1) and/or on a holder holding the reference body in an undisplaceable manner;
   - a 3-dimensional topography measuring device with sufficient accuracy for determining the thickness (Δz) of the removed layer by comparison with the reference marks, preferably a confocal microscope or interferometer, adapted for height difference measurements between measurement areas and reference marks; **characterized in that** the device for removing the material layers is a layer removal system by ionic action, especially a sputtering system (13), where the reference body (1) may be introduced, optionally together with the holder (5), and be exposed to material removal by ionic action.

8. The measuring system for determining an activity depth profile according to claim 7, **characterized in that** at least one sheet (4a, 4b) is provided, which is preferably electrically conductive and made of the same or a similar material as the measurement area (3) of the reference body (1), wherein the sheet (4a, 4b) covers the reference marks (R1, R2, R3) against ionic action in the layer removal system.

9. A method for tribometrical high-resolution online determination of wear on test bodies (6), comprising:

   providing a test body (6), which has at least one radioactive isotope with a defined concentration distribution in an activation area (6c) situated close to the surface, the activity of all isotopes not exceeding a limit of 1 MBq, preferably 100 kBq;
   providing a flow medium (8) circumflowing the test body at at least one friction surface (6a, 6b) and transporting wear particles and optionally being tribologically stressing, the friction surface (6a, 6b) at least overlapping the activation area (6c);
   measuring variation of activity with time of the radioactive isotopes in the flow medium (8), which move from the test body into the flow medium due to tribological stress, online under tribological stress;
   determining a wear rate of the test body by evaluating the variation of activity with time of at least one radioactive isotope in the flow medium; **characterized in that** during the evaluation of the variation of activity with time of radioactive isotopes in the flow medium, referencing with an activity depth profile is conducted, which defines a concentration distribution of the radioactive isotopes in the macroscopic perpendicular distance to a surface, preferably the friction surface, of the test body, represented as activity of the radioactive isotopes perpendicular to the surface or per layer thickness, respectively, wherein the activity depth profile is determined on a reference body (1) made of the same or a sufficiently similar material as the test body (6) and provided with radioactive isotopes in an activation area (2) situated close to the surface in the same or a sufficiently similar concentration distribution as the

601 minutes.

test body, wherein the activity depth profile is determined with a method according to one of the claims 1 to 4.

10. The method for tribometrical high-resolution online determination of wear on test bodies according to claim 9, **characterized in that** the friction area (6a, 6b) overlapping the activation area (6c) of the test body (6) is only part of the overall friction area.

11. The method for tribometrical high-resolution online determination of wear on test bodies according to claim 10, **characterized in that** the friction area (6a, 6b) of the activation area (6c) of the test body has a defined contact ratio.

12. The method for tribometrical high-resolution online determination of wear on test bodies according to one of the claims 9 to 11, **characterized in that** the measuring time for a distinguishability of $\leq 10$ nm, preferably $\leq 1$ nm, of the activity of radioactive isotopes in the flow medium (8) is within a period of 60 minutes, preferably less than 15 minutes.

13. The method for tribometrical high-resolution online determination of wear on test bodies according to claim 12, **characterized in that** for distinguishability of the activity, resolution is set to be $\leq 10$ nm/h, preferably $\leq 1$ nm/h, wherein the error must not exceed 100 % of the measured value.

14. The method for tribometrical high-resolution online determination of wear on test bodies according to one of the claims 9 to 13, **characterized in that** the radioactive isotopes are obtained by nuclear transformation processes from Fe, Cr, Ni, W, Mo, Co, V, C, Mn, Si, Al, Cu, Ti, Mg, N, Zr, P or S.

**Revendications**

1. Procédé de détermination d'un profil de profondeur de l'activité de isotopes radioactifs sur un corps de référence (1), comprenant les étapes consistant à :

a) doter une zone d'activation (2) proche de la surface du corps de référence (1) d'isotopes radioactifs selon au moins une distribution définie de la concentration, l'activité de l'ensemble des isotopes ne dépassant pas une limite de 1 MBq, de préférence 100 kBq ;
b) enlever une couche (x1-x7 ... xn) de matériau du corps de référence dans au moins une zone de mesure définie (3) du corps de référence qui recoupe au moins la zone d'activation (2), aucun enlèvement de matière n'étant effectué sur au moins trois repères (R1, R2, R3) prévus sur le corps de référence (1) et/ou sur un support qui maintient le corps de référence de façon à l'empêcher de se déplacer (5) ;
c) déterminer l'épaisseur (Δz) de la couche enlevée (x1-x7 ... xn) par comparaison avec la position des repères (R1, R2, R3) ;
d) déterminer l'activité (A) de la couche de matière enlevée (x1-x7 ... xn) en mesurant l'activité des isotopes radioactifs dans la zone de mesure (3) du corps de référence avant et après l'enlèvement de la couche de matière ;
e) intégrer les valeurs de radioactivité mesurées (A) et les valeurs d'épaisseur correspondantes (Δz) mesurées pour la couche de matière enlevée (x1-x7 ... xn) dans un profil de profondeur d'activité ; et
f) répéter les étapes b à e jusqu'à ce que, dans ladite au moins une zone de mesure (3), de la matière ait été enlevée jusqu'à une profondeur prédéterminée (z), mesurée comme la distance normale à une surface, ou jusqu'à ce que la radioactivité résiduelle du corps de référence soit tombée en dessous d'une limite inférieure prédéfinie,
**caractérisé en ce que** l'enlèvement des couches de matière (x1-x7 ... xn) se fait par enlèvement de matière au moyen d'ions, par exemple dans une installation de pulvérisation cathodique.

2. Procédé de détermination d'un profil de profondeur d'activité selon la revendication 1, **caractérisé en ce que** les repères (R1, R2, R3) prévus sur le corps de référence et/ou sur le support sont recouverts d'un film (4a, 4b), de préférence constitué d'un matériau identique ou similaire à celui de la zone de mesure du corps de référence.

3. Procédé de détermination d'un profil de profondeur d'activité selon la revendication 1 ou la revendication 2, **caractérisé en ce que** la mesure de l'activité (A) des isotopes radioactifs se fait au moyen d'un détecteur de rayons gamma, en particulier d'un scintillateur NaI.

4. Procédé de détermination d'un profil de profondeur d'activité selon l'une des revendications 1 à 3, **caractérisé en ce que** la détermination de l'épaisseur (Δz) de la couche de matière enlevée dans la zone de mesure se fait par comparaison avec les repères en utilisant un appareil de mesure topographique en trois dimensions suffisamment précis, de préférence un microscope confocal ou un interféromètre, au moyen duquel on effectue une mesure de hauteur différentielle des surfaces ou des couches enlevées.

5. Procédé de détermination d'un profil de profondeur d'activité selon l'une des revendications 1 à 4, **caractérisé en ce que** les isotopes radioactifs sont obtenus par des processus de transmutation nucléaire à partir de Fe, Cr, Ni, W, Mo, Co, V, C, Mn, Si, Al, Cu, Ti, Mg, N, Zr, P ou S.

6. Procédé de détermination d'un profil de profondeur d'activité selon l'une des revendications 1 à 5, **caractérisé en ce que** les couches (x1-x7 ... xn) de matériau du corps de référence sont enlevées dans au moins une zone de mesure définie (3) du corps de référence à des épaisseurs de 1 µm au maximum, de préférence 0,5 µm au maximum.

7. Système de mesure pour la détermination d'un profil de profondeur de l'activité d'isotopes radioactifs sur un corps de référence (1) doté dans une zone d'activation proche de la surface (2) d'isotopes radioactifs selon au moins une distribution définie de la concentration, l'activité de l'ensemble des isotopes ne dépassant pas une limite de 1 MBq, de préférence 100 kBq, comprenant :

- un détecteur de rayonnement servant à détecter l'activité des isotopes radioactifs au moins dans une zone de mesure définie du corps de référence, le détecteur de rayonnement étant de préférence réalisé sous la forme d'un détecteur de rayons gamma, en particulier d'un scintillateur NaI ;
- un dispositif servant à enlever une couche de matériau du corps de référence dans ladite au moins une zone de mesure (3), aucun enlèvement de matière n'étant effectué sur au moins trois repères (R1, R2, R3) prévus sur le corps de référence et/ou sur un support qui maintient le corps de référence de façon à l'empêcher de se déplacer ;
- un appareil de mesure topographique en trois dimensions suffisamment précis servant à déterminer l'épaisseur (Δz) de la couche enlevée par comparaison avec les repères, de préférence un microscope confocal ou un interféromètre configuré pour effectuer une mesure de hauteur différentielle entre les zones de mesure et les repères ;
**caractérisé en ce que**
le dispositif d'enlèvement des couches de matière est réalisé sous la forme d'une installation d'enlèvement de couches par l'action d'ions, en particulier en utilisant une installation de pulvérisation cathodique (13), dans laquelle le corps de référence (1), le cas échéant ensemble avec le support (5), est introduit et exposé à l'enlèvement de matière en agissant sur les zones.

8. Système de mesure pour la détermination d'un profil de profondeur d'activité selon la revendication 7, **caractérisé en ce qu'**il est prévu au moins un film (4a, 4b) qui est de préférence électriquement conducteur et constitué d'un matériau identique ou similaire celui de la zone de mesure (3) du corps de référence (1), le film (4a, 4b) masquant les repères (R1, R2, R3) vis-à-vis de l'action des ions dans l'installation d'enlèvement de couches par l'action d'ions.

9. Procédé de détermination tribométrique à haute résolution en ligne de l'usure de corps d'essai (6), comprenant les étapes consistant à :

préparer un corps d'essai (6) qui, dans une zone d'activation proche de la surface (6c), possède au moins un isotope radioactif avec une distribution définie de la concentration, l'activité de tous les isotopes ne dépassant pas une limite de 1 MBq, de préférence 100 kBq ;
faire passer un milieu (8) circulant en circuit fermé, transportant des particules abrasives et le cas échéant exerçant une sollicitation tribologique, sur au moins une surface de frottement (6a, 6b) du corps d'essai, la surface de frottement (6a, 6b) recoupant au moins la zone d'activation (6c) ;
mesurer en ligne, pendant la sollicitation tribologique, l'évolution dans le temps de l'activité des isotopes radioactifs dans le milieu circulant (8) qui, par suite de la sollicitation tribologique, passent du corps dans le milieu circulant ;
déterminer une vitesse d'usure du corps d'essai en évaluant la courbe d'activité en fonction du temps d'au moins un isotope radioactif dans le milieu circulant ;
**caractérisé en ce que**
pour évaluer la courbe d'activité en fonction du temps d'isotopes radioactifs dans le milieu circulant, on effectue un référencement à un profil de profondeur d'activité définissant une distribution de la concentration des isotopes radioactifs à une distance macroscopique normale à une surface, de préférence à la surface de frottement, du corps d'essai, exprimée en activité des isotopes radioactifs normale à la surface ou par épaisseur de couche, le profil de profondeur d'activité étant déterminé sur un corps de référence (1) qui est fait d'un matériau identique ou suffisamment similaire à celui du corps d'essai (6) et qui a été doté dans une zone d'activation proche de la surface (2) d'isotopes radioactifs selon une distribution de la concentration identique ou juste suffisamment similaire à celle du corps d'essai, le profil de profondeur d'activité étant déterminé par le procédé selon l'une des revendications 1 à 4.

10. Procédé de détermination tribométrique à haute résolution en ligne de l'usure de corps d'essai selon la revendication 9, **caractérisé en ce que** la surface de frottement (6a, 6b) qui recoupe la zone d'activation (6c) dur corps d'essai (6) représente seulement une partie de la surface de frottement totale du corps d'essai.

11. Procédé de détermination tribométrique à haute résolution en ligne de l'usure de corps d'essai selon la revendication 10, **caractérisé en ce que** la surface de frottement (6a, 6b) de la zone d'activation (6c) du corps d'essai présente un ratio d'attaque défini.

12. Procédé de détermination tribométrique à haute résolution en ligne de l'usure de corps d'essai selon l'une des revendications 9 à 11, **caractérisé en ce que** le temps de mesure pour une différenciabilité 10 nm, de préférence ≤ 1 nm, de l'activité des isotopes radioactifs dans le milieu circulant (8) est inférieur à 60 minutes, de préférence inférieur à 15 minutes.

13. Procédé de détermination tribométrique à haute résolution en ligne de l'usure de corps d'essai selon la revendication 12, **caractérisé en ce que** la résolution pour la différenciabilité de l'activité est fixée à ≤ 10 nm/h, de préférence ≤ 1 nm/h, l'erreur pouvant être au maximum égale à 100 % de la valeur mesurée.

14. Procédé de détermination tribométrique 2 haute résolution en ligne de l'usure de corps d'essai selon l'une des revendications 9 à 13, **caractérisé en ce que** les isotopes radioactifs sont obtenus par des processus de transmutation nucléaire à partir de Fe, Cr, Ni, W, Mo, Co, V, C, Mn, Si, Al, Cu, Ti, Mg, N, Zr, P ou S.

# Fig. 1

# Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9924812 A

**In der Beschreibung aufgeführte Nicht-Patentliteratur**

- **KASAKO TOSHISO et al.** Wear measurement at depths of several tens micrometers on the surface of iron using a thin layer activation method by 7 MeV proton beam. *NUCL INSTRUM METHODS PHYS RES,* November 1988, vol. B40-41, 587-590

- **SCHERGE M et al.** Wear measurement using radionuclide-technique (RNT). *WEAR,* Mai 2003, vol. 254 (9), 801-817
- **Scherge M. ; Pöhlmann K. ; Gerve A.** Wear measurement using radioniclide-technique (RNT). *Wear,* 2003, vol. 254, 801-817